# EUROPEAN PATENT APPLICATION

(11) **EP 1 202 207 A1**
(43) Date of publication of application: **02.05.2002**
(21) Application number: 01912403.1
(22) Date of filing: 15.03.2001
(51) Int. Cl.: G06F 17/60

(54) **REPAIR REQUEST DEALING METHOD AND REPAIR REQUEST DEALING APPARATUS**

(30) Priority: 17.03.2000 JP 2000076978
(71) Applicant: Toshiba Tec Kabushiki Kaisha, Tokyo 101-8442 (JP)
(72) Inventor: IGUTI, Akio, Isehara-shi, Kanagawa 259-1145 (JP); TODA, Kazuo, Hachioji-shi, Tokyo 193-0814 (JP); OSHIMA, Ikuo, Asahi-ku, Yokohama-shi, Kanagawa 241-002 (JP); NONAKA, Tetuo, Setagaya-ku, Tokyo 156-0053 (JP)
(74) Representative: Fuchs Mehler Weiss & Fritzsche
(86) International application number: JP0102065
(87) International publication number: WO0169478

(57) **Abstract**

There is disclosed a repair request handling apparatus for using a home page and allowing a client terminal to provide a display for urging a selection input of information for identifying each type of product as a repair object (S2, S3), subsequently allowing the client terminal to display a question for checking a trouble state of an identified repair object product, when there is the selection input of the information for identifying the repair object product (S4), identifying a trouble based on trouble information stored in a trouble information database (22), when there is the answer to the question from the client terminal, and calculating an estimate of a cost required for a repair of the trouble and a date of delivery by identification of the trouble, and allowing the client terminal to display the calculated estimate and the date of delivery (S6) and to provide a display for allowing a client to select presence/absence of a repair request or purchase of a new product (S8).

## Description

### Technical Field

The present invention relates to a repair request handling method and repair request handling apparatus for using Internet, and the like to accept a repair request from a client terminal and perform a process corresponding to a repair.

### Background Art

The present invention relates to a repair request handling method and repair request handling apparatus for using Internet, and the like to accept a repair request from a client terminal and perform a process corresponding to a repair.

In a conventional system, for example, when a client requests a maker, and the like to repair a home electric appliance, and the like, the client contacts a service center by telephone, and the like. It is then determined that a serviceman comes from the service center to diagnose a trouble of a trouble product and repair the product on the site, or that the trouble product is sent to the service center and the trouble is diagnosed and the product is repaired in the service center. In this case, the service center checks stock of a trouble component, and the like as the occasion demands, and informs the client of cost estimate and date of delivery by telephone, and the like.

However, this system imposes a large burden on the client, the repair takes much time, and a sufficient service to the client cannot be realized.

Therefore, an object of the present invention is to provide a repair request handling method and repair request handling apparatus in which a client can easily make a request for repair, a client's desire for purchase of a new product because of a breakage can be handled if any, therefore a service to the client is sufficiently enhanced, and a maker can quickly fulfill repair business and repair operation.

### Disclosure of the Invention

In a repair request handling method of the present invention, a client can easily make a request for repair, a client's desire for purchase of a new product because of a breakage can be handled if any, therefore a service to the client is sufficiently enhanced, and a maker can quickly fulfill repair business and repair operation.

In a repair request handling apparatus of the present invention, the client can easily make a request for repair, the client's desire for purchase of the new product because of the breakage can be handled if any, therefore the service to the client is sufficiently enhanced, and the maker can quickly fulfill repair business and repair operation.

### Brief Description of the Drawings

FIG. 1 is a diagram showing an embodiment of the present invention, and a block diagram showing a whole constitution of a repair request handling system.
FIG. 2 is an explanatory view of operation of a repair request handling apparatus with respect to an access from a client terminal in the embodiment.
FIG. 3 is a diagram showing one screen of a home page in the embodiment.
FIG. 4 is a diagram showing another screen of the home page in the embodiment.
FIG. 5 is a diagram showing another screen of the home page in the embodiment.
FIG. 6 is a diagram showing another screen of the home page in the embodiment.
FIG. 7 is a diagram showing another screen of the home page in the embodiment.
FIG. 8 is a diagram showing another screen of the home page in the embodiment.
FIG. 9 is a diagram showing another screen of the home page in the embodiment.
FIG. 10 is a diagram showing another screen of the home page in the embodiment.
FIG. 11 is a diagram showing another screen of the home page in the embodiment.
FIG. 12 is a diagram showing another screen of the home page in the embodiment.
FIG. 13 is a diagram showing another screen of the home page in the embodiment.
FIG. 14 is a flowchart showing an operation of a time of repair request in the embodiment.

### Best Mode for Carrying Out of the Invention

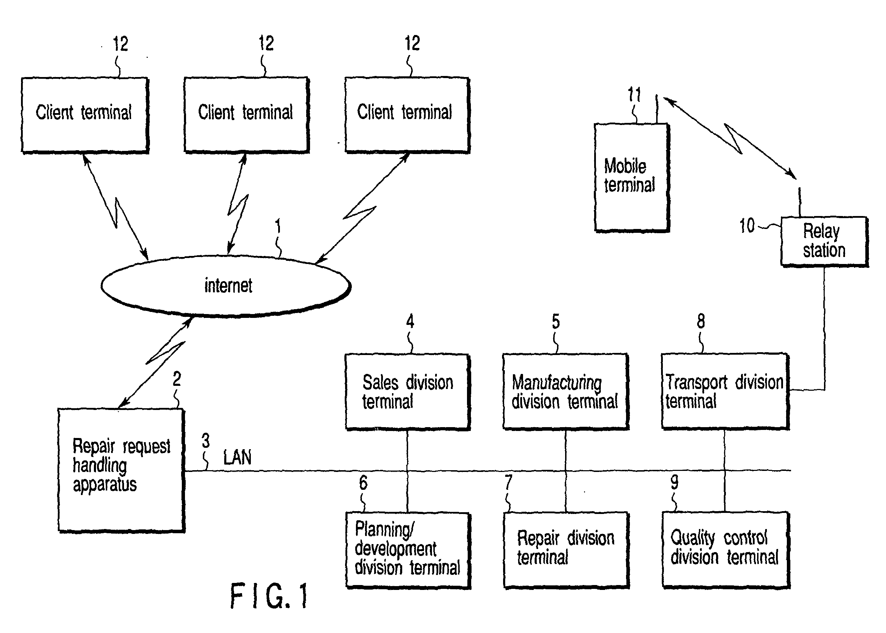

FIG. 1 is a block diagram showing a whole constitution of a repair request handling system. Internet 1 is connected to a repair request handling apparatus 2 including a main server possessed by a maker, and the repair request handling apparatus 2 is connected to a sales division terminal 4, manufacturing division terminal 5, planning/development division terminal 6, repair division terminal 7, transport division terminal 8, quality control division terminal 9, and the like via a LAN (local area network) 3. The transport division terminal 8 is also connected to a relay station 10, and can perform radio communication with a radio mobile terminal 11 via the relay station 10. Moreover, the Internet 1 is connected to a large number of client terminals 12 constituted of personal computers.

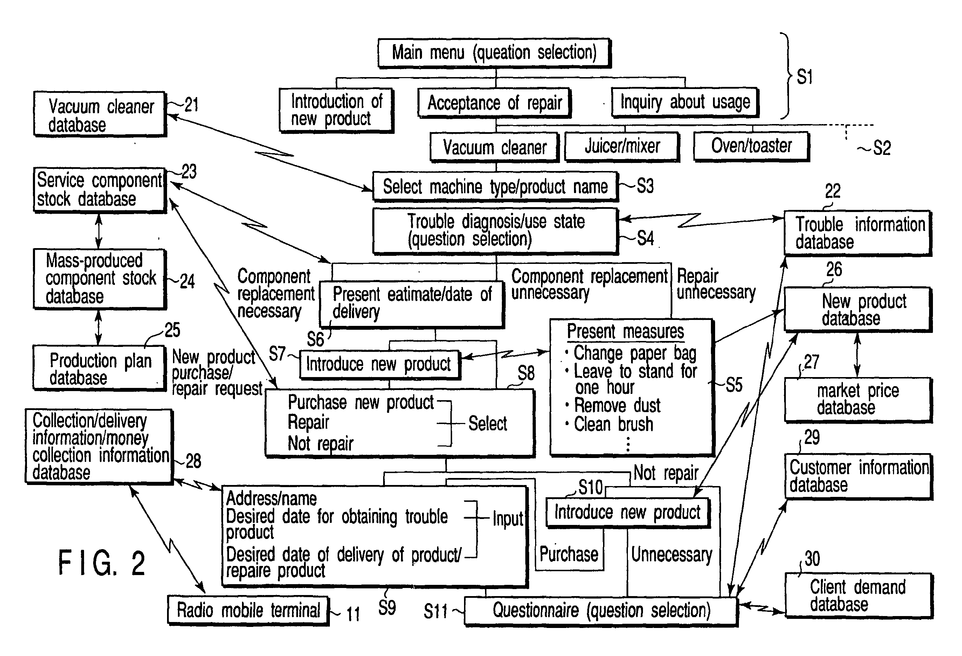

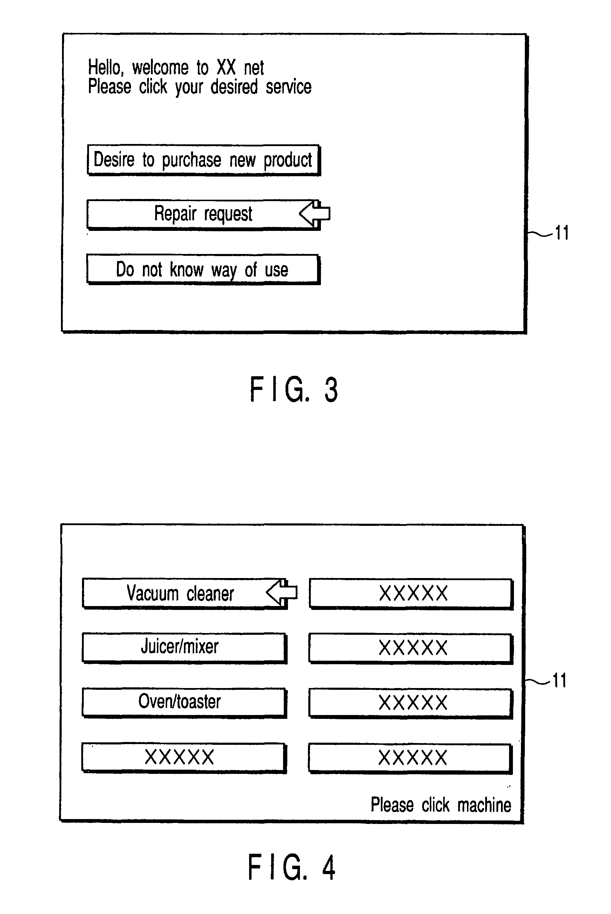

FIG. 2 is an explanatory view of operation of the repair request handling apparatus 2 when the client terminal 12 accesses the repair request handling apparatus 2. When there is an access to a home page set in the main server of the repair request handling apparatus 2 from the client terminal 12, first in S1 in the client terminal 12, a main menu of a question selection system is displayed in the accessed client terminal 12. In the main menu, as shown in FIG. 3, a display for asking a client to select introduction of a new product, acceptance of repair, or inquiry about usage is provided.

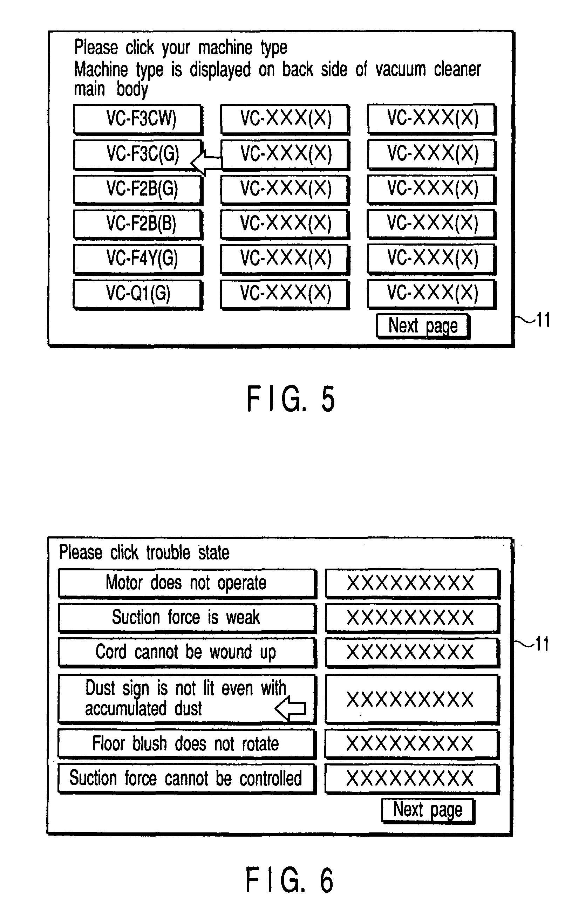

When the client selects/inputs the-acceptance of the repair in this state, next in S2, as shown in FIG. 4, a display for selecting a repair object product, that is, a vacuum cleaner, juicer/mixer, oven/toaster, or the like is provided in the client terminal 12. In this state, for example, when there is a selection input of the vacuum cleaner from the client terminal 12, the repair request handling apparatus 2 reads machine types and product names of the vacuum cleaner from a vacuum cleaner database 21 and provides a display for selecting the machine type and product name in the client terminal 12 as shown in FIG. 5 (first display control means).

Subsequently, when there is a selection input of the machine type and product name from the client terminal 12 in S3, a display of the question selection system for checking a trouble diagnosis and use state is provided in the client terminal 12 as shown in FIG. 6 (second display control means).

Subsequently, when there is a selection input with respect to questions from the client terminal 12 in S4, a trouble is identified based on trouble information of a trouble information database 22 with various types of trouble information stored therein (trouble identification means). It is judged whether component replacement is necessary or unnecessary, or repair is unnecessary. Moreover, the identified trouble information is compiled in the trouble information database 22, and the information is updated. Additionally, in this case, with the same trouble information as the trouble information already registered, the number of registrations is counted. The trouble information compiled in the trouble information database 22 is read mainly by the quality control division terminal 9 and utilized in quality control of the product in a quality control division.

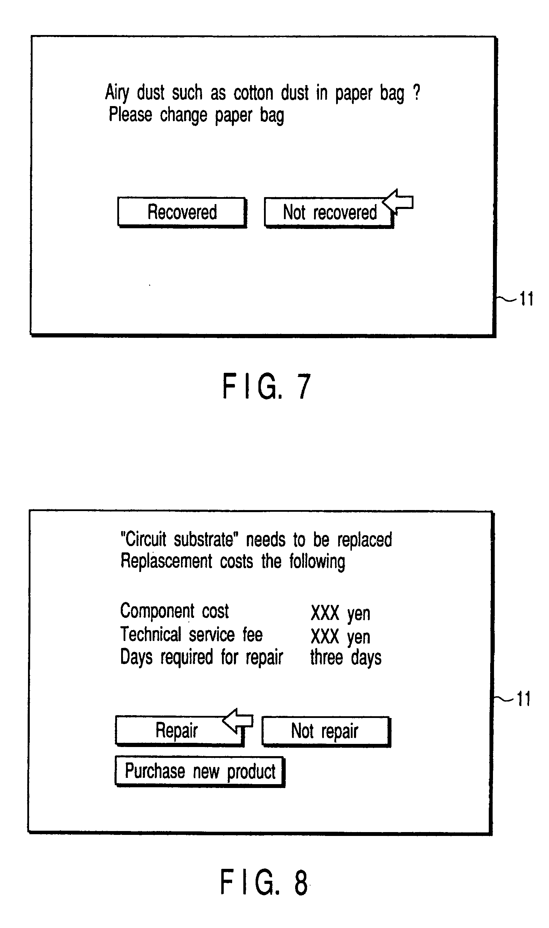

When the repair is unnecessary, a presentation is made for the trouble in the client terminal 12 in S5. This presents contents which can easily be handled by the client, such as "change a paper bag", "leave a machine to stand for one hour", "remove dust", and "clean a brush", and asks the client to perform an operation. For example, with presentation of "change the paper bag", a display shown in FIG. 7 is provided and, as a result, the client is asked to answer that the machine "has recovered" or "has not recovered". If the machine does not recover, the question selection system for checking the trouble diagnosis or the use state is displayed again. It is then judged based on the trouble information of the trouble information database 22 whether the component replacement is necessary or unnecessary, or the repair is unnecessary.

When the component replacement is judged to be necessary or unnecessary, an estimate of a cost required for the repair, and a date of delivery are calculated based on the identification of the trouble and presented in the client terminal 12 in S6 (calculation means of estimate and date of deliver).

In this case, when the component replacement is judged to be necessary, a service component stock database 23 is referred to, and a stock situation of a replacement component is checked.

When the replacement component is a mass-produced component, a mass-produced component stock database 24 is referred to. When the replacement component does not exist as stock data in the service component stock database 23 or the mass-produced component stock database 24, a production plan database 25 is referred to for a production plan of the replacement component.

Additionally, the service component stock database 23, mass-produced component stock database 24, and production plan database 25 are updated by information inputted mainly from the manufacturing division terminal 5, and the updated information can always be supplied to the repair request handling apparatus 2.

Moreover, the estimate of the cost required for the repair and the date of delivery are displayed in the client terminal 12. Subsequently, for example, in a case in which two or more years have elapsed since purchase of the repair object product, or a certain period has elapsed since stop of production, new product information of the same product type as that of the repair object product is read from a new product database 26 and displayed in the client terminal 12 in S7. The new product information displayed in this case may be new product information of the same price group as that of the repair object product, or new product information of the cost group equivalent to a repair estimated amount of the repair object product.

A new product price of the new product database 26 is constantly adjusted by a latest market price obtained from a market price database 27. The information of the new product database 26 and market price database 27 is updated by the sales division terminal 4. Moreover, when the repair object product is in a free repair period and is relatively new, the display of the new product information is prohibited.

Subsequently, in S8, a display shown in FIG. 8 is provided in the client terminal 12 to ask the client to select whether or not the repair request is made, or the purchase of the new product is desired (third display control means).

When there is a selection input of the repair request from the client terminal 12 in this state, a display for urging the input of client information, and the like is provided in the client terminal 12 in S9.

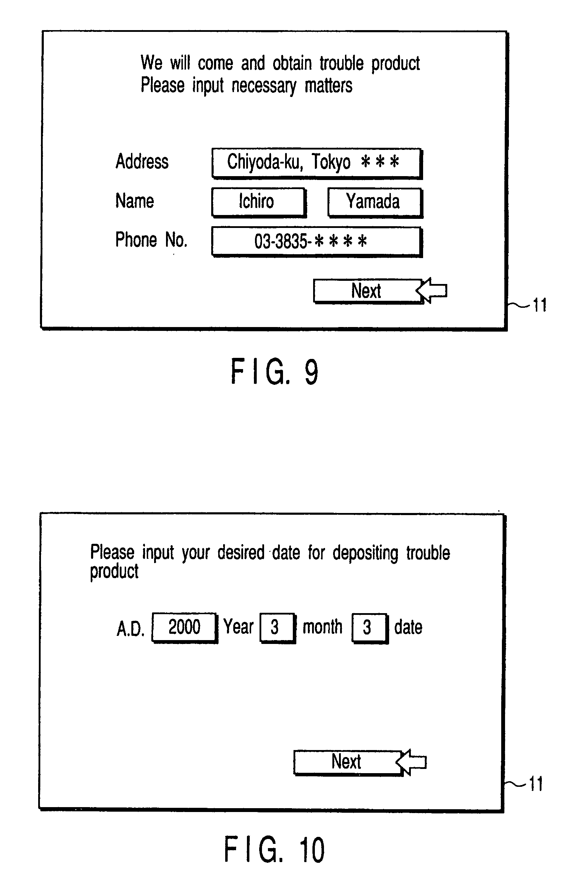

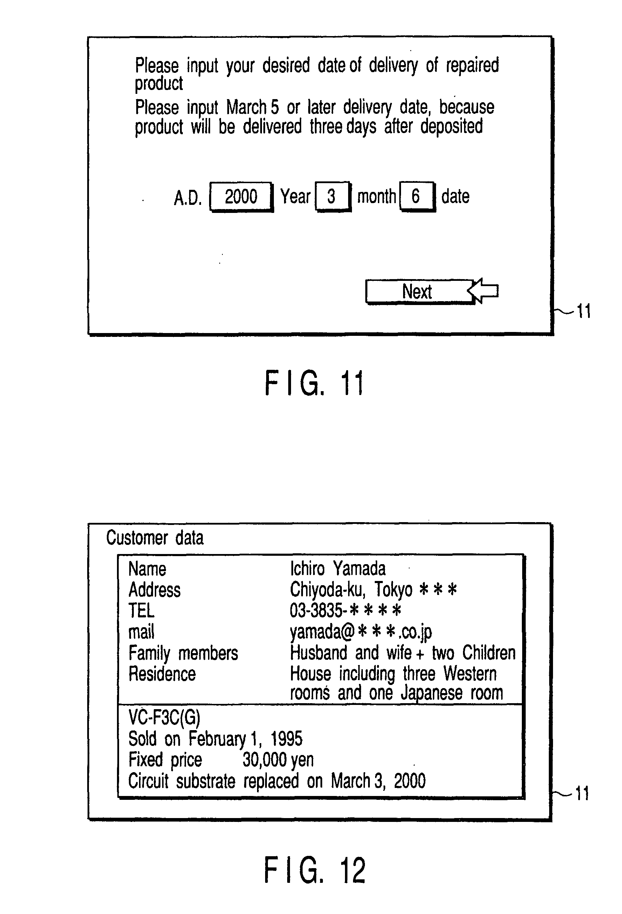

The display for urging the input of an address, name, and telephone number of the client as the client information is provided as shown in FIG. 9, and the client is asked to input the information. Subsequently, a display for urging the client to input a desired date for depositing the repair request product is provided as shown in FIG. 10, and the client is asked to input the date. Subsequently, a display for urging the input of a desired date of delivery of the repaired request product is provided as shown in FIG. 11, and the client is asked to input the date.

The repair request handling apparatus 2 confirms the input of the respective information such as the client information, desired date for depositing the repair request product, and desired date of delivery of the repaired product, and defines acceptance of the repair request. Subsequently, the apparatus transmits the respective accepted information such as the client information, desired date for depositing the repair request product, and desired date of delivery of the repaired product together with information of estimated amount and date of delivery to the repair division terminal 7 to instruct the division to repair the product. Moreover, the apparatus transmits the client information and information of repair component to the manufacturing division terminal 5. Thereby, the manufacturing division checks service component stock data of the service component stock database 23, mass-produced component stock data of the mass-produced component stock database 24, and production plan of the production plan database 25, secures the repair component, and informs the repair division terminal 7. Moreover, the manufacturing division transmits the respective information such as the client information, desired date for depositing the repair request product, and desired date of delivery of the repaired product to the transport division terminal 8. Thereby, a transport division goes to client's home to obtain the repair request product on the desired date, and transports the obtained request product to a repair division. Additionally, a home delivery service company may perform this operation in place of the transport division.

The repair division checks the repair request product for a portion to be repaired anew, checks a stock state of the repair component informed by the manufacturing division via the repair division terminal 7, and arranges a repair operation plan. In this case, when a cost required for the actual repair is different from an estimated amount, the repair request handling apparatus 2 is informed of the difference by the repair division terminal 7 via the LAN 3 in advance, and the repair request handling apparatus 2 contacts the corresponding client terminal 12 to obtain a client's consent anew.

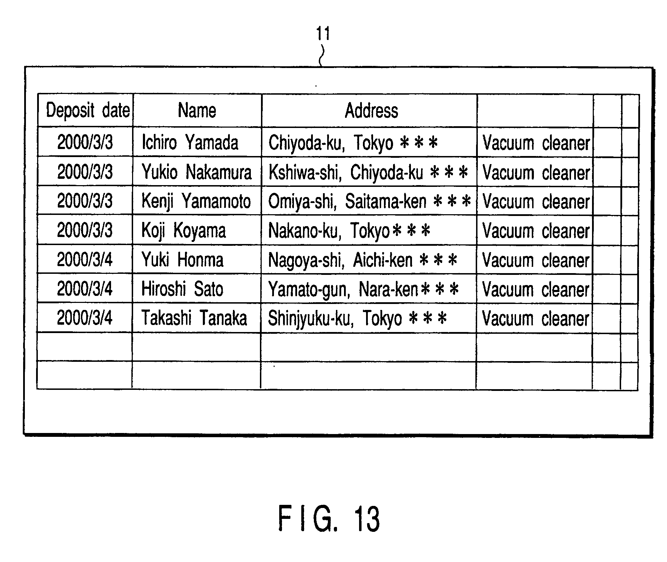

The repair division finally defines the cost required for the repair in this manner, and the respective information such as the client information, desired date for depositing the repair request products, and desired date of delivery of the repaired product together with the amount are compiled into a collection/delivery information/money collection information database 28. In this case, the collection/delivery information compiled in the collection/delivery information/money collection information database 28 is stored, for example, as a content of a list including the deposit date, name and address of the client, name of the repair request product, and the like as shown in FIG. 13.

Moreover, the repair division, having obtained a supply of the repair component from the manufacturing division, repairs the repair request product. Upon completion of the repair, the repair division terminal 7 contacts the transport division terminal 8, and the transport division obtains the repair request product from the repair division and transports the product to the client on the client's desired date of delivery. In this case, a person in charge of delivery of the transport division carries the radio mobile terminal 11, and money collection information is radio-transmitted to the radio mobile terminal 11 from the transport division terminal 8 via the relay station 10 during collecting of money from the client. The person in charge of delivery performs the money collection from the client in accordance with the money collection information.

Additionally, examples of a client's payment method include cash, further a debit card and credit card, and with the debit card or the credit card, payment can be achieved by disposing a card reader for reading the card in the radio mobile terminal 11.

Moreover, when there is a selection input indicating purchase of the new product from the client terminal 12, a display for urging the input of the client information, and the like is provided in the client terminal 12 in S9. Subsequently, when the client inputs the client information of the address, name, and telephone number, and further inputs the desired date of delivery, the repair request handling apparatus 2 defines the acceptance of the purchase of the new product. In this case, the information of new product purchase, client information, and desired date of delivery are transmitted to the transport division terminal 8 of the transport division, and the transport division is to deliver the new product to the client and collect money on the desired date of delivery.

Furthermore, there is a selection input indicating that no repair request is made from the client terminal 12. In this case, a display for urging the selection as to whether or not the new product information is referred to is provided in the client terminal 12. There is a selection input indicating that the new product information is to be referred to, and in S10 the new product information of the same product type as that of the repair object product is read from the new product database 26 and displayed in the client terminal 12. Additionally, a display for selecting whether or not the purchase is required is also provided. Also in this case, the displayed new product information may be the new product information of the same price group as that of the repair object product, or the new product information of the cost group equivalent to the repair estimated amount of the repair object product.

Moreover, when there is a selection input indicating the desire for the purchase of the new product from the client terminal 12, the display for urging the input of the client information, and the like is also provided in the client terminal 12 in S9. Subsequently, when the client inputs the client information of the address, name, and telephone number, and further inputs the desired date of delivery, the repair request handling apparatus 2 defines the acceptance of the purchase of the new product. In this case, the information of the new product purchase, client information, and desired date of delivery are transmitted to the transport division terminal 8 of the transport division, and the transport division is to deliver the new product to the client and collect money on the desired date of delivery. Also in this case, the home delivery service company may perform this operation in place of the transport division.

During the acceptance of the repair request and the new product purchase, the respective information such as the client information, repair request product, and new product purchase inputted from the client terminal 12 are sent to and stored in the collection/delivery information/money collection information database 28.

Subsequently, when the acceptance is defined by the selection input from the client terminal 12, a questionnaire of the question selection system is displayed in the client terminal 12 in S11, and the client is asked to input answers to the questionnaire. Moreover, when it is selected not to purchase the new product in S10, the questionnaire of the question selection system is displayed in the client terminal 12 in S11, and the client is asked to input answers to the questionnaire. Furthermore, there is a selection input indicating that the repair is not requested, and there is a selection input indicating that new product information is not referred to from the client terminal 12 in S8. In this case, immediately in S11, the questionnaire of the question selection system is displayed in the client terminal 12, so that the client is asked to input the answer to the questionnaire.

The questionnaire of the question selection system in S11 differs in content depending upon whether the client has made a request for the repair, has desired to purchase the new product, or has neither made the request for the repair nor desired to purchase the new product. When there is an answer to the questionnaire from the client terminal 12, the repair request handling apparatus 2 takes and compiles the answer into a customer information database 29 and client demand database 30. Moreover, the answer is also compiled into the trouble information database 22.

The customer information database 29 compiles the information, for example, in the form of customer data shown in FIG. 12, and the information compiled in the database 29 is read and utilized mainly by the sales division terminal 4. The client demand database 30 compiles the information by demand, and the information compiled in the database 30 is read and utilized mainly by the planning/development division terminal 6.

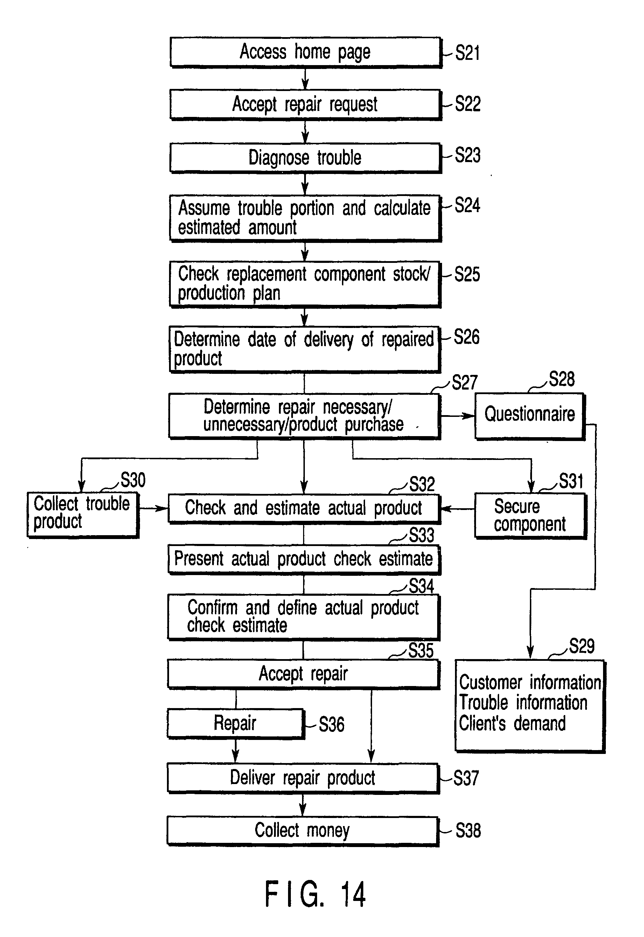

An operation of the repair request handling system constituted as described above will be described with reference to a flowchart shown in FIG. 14.

First in S21, the client terminal 11 accesses the home page of the main server of the repair request handling apparatus 2. Thereby, a screen for selecting a desire to purchase the new product, make the repair request, or know a way of use is displayed in the client terminal 12, and the client who desires to make the repair request selects an item indicating the desire to make the repair request. Thereby, the screen turns to a screen for the repair request, and the client operates the screen of the home page to input the information necessary for the repair request of the trouble product. The repair request handling apparatus 2 accepts the repair request by the information input in S22.

The repair request handling apparatus 2 having received the repair request uses the trouble information of the trouble information database 22 to diagnose the trouble of the repair request product and identify the trouble in S23, estimates a trouble portion and calculates estimated amount and date of delivery in S24, and uses the information of the service component stock database 23, mass-produced component stock database 24, and production plan database 25 to check the stock state and production plan of the replacement component in S25. Subsequently, the apparatus determines the date of delivery of the repair request product in S26. The apparatus identifies the trouble, stores new trouble data in the trouble information database 22, and updates the database.

Subsequently, the repair request handling apparatus 2 presents the estimated amount and date of delivery of the repaired product, and introduces the new product on the home page, and asks the client to select the desire to repair or not to repair the product, or to purchase the new product. Then, the client performs a selection operation on the home page, and it is determined in S27 that the repair is necessary or unnecessary or the new product is purchased. Additionally, when the repair is necessary, it is necessary to input the client information, desired date for depositing the repair request product, and desired date of delivery. Moreover, when the new product is purchased, it is necessary to input the client information and desired date of delivery of the product.

It is determined that the repair is necessary or unnecessary or the new product is purchased, then in S28 the questionnaire of the question selection system is displayed on the home page, and the client is asked to answer the questionnaire. When there is an answer to the questionnaire, an answer result is compiled into the trouble information database 22, customer information database 29, and client demand database 30 in S29.

Moreover, it is judged whether the repair is necessary or unnecessary or the new product is purchased, then it is determined that the repair is necessary. In this case, in S30 the client information, the desired date for depositing the repair request product, and the desired date of delivery are stored in the collection/delivery information/money collection information database 28 and transmitted to the transport division terminal 8, and it is instructed to collect the repair request product. Moreover, when the repair is necessary, in S31 the client information and repair component information are transmitted to the manufacturing division terminal 5. Thereby, the manufacturing division checks the service component stock data of the service component stock database 23, mass-produced component stock data of the mass-produced component stock database 24, and production plan data of the production plan database 25 via the manufacturing division terminal 5, and secures the repair component.

The repair division obtains the repair request product from the transport division in S32, then checks the portion to be repaired anew and calculates an actual product check estimate. Subsequently, in S33 the calculated estimate is transmitted and presented to the repair request handling apparatus 2.

The repair request handling apparatus 2 checks the actual product check estimated amount from the repair division in S34. When there is no difference from the first estimated amount, the estimated amount is defined as a repair price, and the repair is accepted in S35. Subsequently, the repair division uses the repair component obtained from the manufacturing division to repair the repair request product in S36. Upon completion of the repair, the repair division transfers the repaired product to the transport division, and the transport division delivers the repaired product on the client's desired date in S37, and collects the money from the client in S38, thereby ending a series of operation.

Moreover, when the repair is different from the first expected repair as a result of check of the portion to be repaired in the repair division, the repair component information is transmitted anew to the manufacturing division terminal 5 of the manufacturing division from the repair division terminal 7, and the manufacturing division secures the repair component anew. Subsequently, the repair division calculates the actual product check estimate anew in S32, and transmits and presents the calculated estimate to the repair request handling apparatus 2 in S33.

The repair request handling apparatus 2 checks the actual product check estimated amount from the repair division in S34, judges that the amount is different from the first estimated amount, and informs the corresponding client terminal 12 of that the actual repair price is different from the first estimated amount in order to obtain the client's consent anew.

Subsequently, when the repair request handling apparatus 2 informs the repair division terminal 7 of the obtained client's consent, the repair division accepts the repair in S35, and uses the repair component obtained from the manufacturing division to repair the repair object product in S36. Upon completion of the repair, the repair division transfers the repaired product to the transport division, and the transport division delivers the repaired product on the client's desired date in S37, and collects the money from the client in S38, thereby ending the series of operation.

Moreover, when the actual repair price is different from the first estimated amount, therefore the client's consent cannot be obtained, and the client withdraws the repair request, the repair is not accepted in S35, and the repair object product is returned in S37 in order to end the series of operation.

Furthermore, when the new product purchase is determined, the client information and desired date of delivery are stored in the collection/delivery information/money collection information database 28 and transmitted to the transport division terminal 8, and it is to deliver the new product and collect the money. Thereby, the transport division is instructed to deliver the new product determined to be purchased by the client to the client and collect the money on the desired date of delivery.

As described above, the client may operate its own terminal 12 to access the main server of the maker's repair request handling apparatus 2 and open the home page, and may perform the operation of the repair request in accordance with the instruction on the home page, so that the client can easily make the repair request.

Moreover, during the operation of the repair request on the home page, the new product information of the same price group as that of the repair object product, or of the price group equivalent to the repair estimated amount is displayed on the home page, and the client is asked to purchase the product. When the client desires to purchase the new product because of breakage, the desire can be satisfied. That is, the new product purchase by the client is accepted and the product can be can be delivered. This can sufficiently enhance the service to the client.

Furthermore, when the maker accepts the repair request from the client via the repair request handling apparatus 2, the securing of the repair component from the manufacturing division, indication of the desired date for collecting the repair request product and desired date of delivery to the transport division, and presentation of the estimated amount and date of delivery to the repair division can immediately be achieved via the respective terminals 5, 8, 7, so that repair business and repair operation can quickly be fulfilled.

As described above, according to the present invention, the client can easily make the repair request, the client's desire to purchase the new product because of the breakage can be handled if any, therefore the service to the client is sufficiently enhanced, and the maker can quickly fulfill the repair business and repair operation.

### Industrial Applicability

As described above, the present invention is effective for a technical field of a repair request handling method and repair request handling apparatus in which Internet, and the like are used to accept a repair request from a client terminal and to perform a process corresponding to a repair.

## Claims

1. A repair request handling method **characterized by** comprising: allowing a client terminal to provide a display for urging a selection input of information for identifying each type of product as a repair object; subsequently allowing said client terminal to display a question for checking a trouble state of an identified repair object product, when there is the selection input of the information for identifying the repair object product; identifying a trouble based on an answer and trouble information stored in a trouble information database, when there is the answer to the question from said client terminal; calculating an estimate of a cost required for a repair of the trouble and a date of delivery by identification of the trouble; and allowing said client terminal to display the calculated estimate and the date of delivery and to provide a display for allowing a client to select presence/absence of a repair request or purchase of a new product.

2. The repair request handling method according to claim 1, **characterized by** further comprising updating the trouble information of the trouble information database based on the identified trouble, when the trouble is identified.

3. The repair request handling method according to claim 1, **characterized by** further comprising:
allowing the client terminal to provide a display for urging an input of client information such as a client name, when there is a selection input of the repair request from the client terminal; and defining acceptance of the repair request, when there is the input of the predetermined client information from said client terminal.

4. The repair request handling method according to claim 3, **characterized by** further comprising instructing collection of the repair object product from the client, when the acceptance of the repair request is defined.

5. The repair request handling method according to claim 4, **characterized by** further comprising updating the trouble information of the trouble information database based on the identified trouble, when the trouble is identified.

6. The repair request handling method according to claim 3, **characterized by** further comprising instructing collection of the repair object product from the client and radio-transmitting money collection information to a radio mobile terminal, when the acceptance of the repair request is defined.

7. The repair request handling method according to claim 6, **characterized by** further comprising updating the trouble information of the trouble information database based on the identified trouble, when the trouble is identified.

8. The repair request handling method according to claim 3, **characterized by** further comprising updating the trouble information of the trouble information database based on the identified trouble, when the trouble is identified.

9. A repair request handling method **characterized by** comprising: allowing a client terminal to provide a display for urging a selection input of information for identifying each type of product as a repair object; subsequently allowing said client terminal to display a question for checking a trouble state of an identified repair object product, when there is the selection input of the information for identifying the repair object product; identifying a trouble based on an answer and trouble information stored in a trouble information database, when there is the answer to the question from said client terminal; calculating an estimate of a cost required for a repair of the trouble and a date of delivery by identification of the trouble; allowing said client terminal to display the calculated estimate and the date of delivery and to provide a display for allowing a client to select presence/absence of a repair request or purchase of a new product; and reading and displaying new product information of the same product type as that of the repair object product from a new product information database.

10. The repair request handling method according to claim 9, **characterized by** further comprising prohibiting the new product information from being displayed in the client terminal, when a purchase date of the repair object product is within a predetermined period.

11. The repair request handling method according to claim 10, **characterized by** further comprising updating the trouble information of the trouble information database based on the identified trouble, when the trouble is identified.

12. The repair request handling method according to claim 9, **characterized by** further comprising updating the trouble information of the trouble information database based on the identified trouble, when the trouble is identified.

13. The repair request handling method according to claim 9, **characterized by** further comprising reading the new product information of the same price group and the same product type as those of the repair object product from the new product information database and displaying the new product information in said client terminal.

14. The repair request handling method according to claim 13, **characterized by** further comprising prohibiting the new product information from being displayed in the client terminal, when a purchase date of the repair object product is within a predetermined period.

15. The repair request handling method according to claim 14, **characterized by** further comprising updating the trouble information of the trouble information database based on the identified trouble, when the trouble is identified.

16. The repair request handling method according to claim 13, **characterized by** further comprising updating the trouble information of the trouble information database based on the identified trouble, when the trouble is identified.

17. The repair request handling method according to claim 9, **characterized by** further comprising reading the new product information of the same price group of an estimated amount and the same product type as those of the repair object product from the new product information database and displaying the new product information in said client terminal.

18. The repair request handling method according to claim 17, **characterized by** further comprising prohibiting the new product information from being displayed in the client terminal, when a purchase date of the repair object product is within a predetermined period.

19. The repair request handling method according to claim 18, **characterized by** further comprising updating the trouble information of the trouble information database based on the identified trouble, when the trouble is identified.

20. The repair request handling method according to claim 17, **characterized by** further comprising updating the trouble information of the trouble information database based on the identified trouble, when the trouble is identified.

21. A repair request handling method **characterized by** comprising: allowing a client terminal to provide a display for urging a selection input of information for identifying each type of product as a repair object; subsequently allowing said client terminal to display a question for checking a trouble state of an identified repair object product, when there is the selection input of the information for identifying the repair object product; identifying a trouble based on an answer and trouble information stored in a trouble information database, when there is the answer to the question from said client terminal; calculating an estimate of a cost required for a repair of the trouble and a date of delivery by identification of the trouble; allowing said client terminal to display the calculated estimate and the date of delivery and to provide a display for allowing a client to select presence/absence of a repair request or purchase of a new product; allowing the client terminal to provide a display for urging an input of client information such as a client name, when there is the selection input of the repair request from said client terminal; defining acceptance of the repair request, when there is the input of the predetermined client information from said client terminal; or allowing the client terminal to provide the display for urging the input of the client information such as the client name, when there is the selection input of the purchase of the new product from said client terminal; and defining the acceptance of the purchase of the new product, when there is the input of the predetermined client information from said client terminal.

22. The repair request handling method according to claim 21, **characterized by** further comprising instructing collection of the repair object product from the client, when the acceptance of the repair request is defined.

23. The repair request handling method according to claim 22, **characterized by** further comprising updating the trouble information of the trouble information database based on the identified trouble, when the trouble is identified.

24. The repair request handling method according to claim 21, **characterized by** further comprising instructing collection of the repair object product from the client and radio-transmitting money collection information to a radio mobile terminal, when the acceptance of the repair request is defined.

25. The repair request handling method according to claim 24, **characterized by** further comprising updating the trouble information of the trouble information database based on the identified trouble, when the trouble is identified.

26. The repair request handling method according to claim 21, **characterized by** further comprising updating the trouble information of the trouble information database based on the identified trouble, when the trouble is identified.

27. The repair request handling method according to any one of claims 1 to 26, **characterized by** further comprising: displaying questionnaires of a question selection system having different contents in the client terminal based on the selection input of the repair request, the selection input of unnecessary repair, or the selection input of the new product purchase; and taking answers to the questionnaires from said client terminal.

28. A repair request handling apparatus **characterized by** comprising: first display control means for allowing a client terminal to provide a display for urging a selection input of information for identifying each type of product as a repair object; second display control means for allowing the client terminal to display a question for checking a trouble state of an identified repair object product, when there is the selection input of the information for identifying the repair object product from said client terminal; a trouble information database in which respective types of trouble information are stored; trouble identification means for identifying a trouble based on an answer and the trouble information stored in the trouble information database, when there is the answer to the question for checking the trouble state from said client terminal; means for calculating an estimate of a cost required for a repair of the trouble and a date of delivery based on the trouble identified by the trouble identification means; a new product information database in which respective types of new product information are stored; and third display control means for allowing said client terminal to display the calculated estimate and the date of delivery and to provide a display for allowing a client to select presence/absence of a repair request or purchase of a new product, and reading and displaying new product information of the same product type as that of the repair object product from said new product information database.
